Europäisches Patentamt

European Patent Office

Office européen des brevets

(19)

(11) **EP 0 503 687 B1**

(12) **EUROPÄISCHE PATENTSCHRIFT**

(45) Veröffentlichungstag und Bekanntmachung des Hinweises auf die Patenterteilung:
**17.01.1996 Patentblatt 1996/03**

(51) Int Cl.6: **F16F 1/38**, F16F 13/00

(21) Anmeldenummer: **92109819.0**

(22) Anmeldetag: **21.11.1987**

(54) **Hülsengummifeder**

Bushing-type rubber spring

Ressort du type à manchon en caoutchouc

(84) Benannte Vertragsstaaten:
**DE FR GB IT**

(30) Priorität: **23.07.1987 DE 3724431**

(43) Veröffentlichungstag der Anmeldung:
**16.09.1992 Patentblatt 1992/38**

(62) Anmeldenummer der früheren Anmeldung nach Art. 76 EPÜ: **87117199.7**

(73) Patentinhaber: **Firma Carl Freudenberg
D-69469 Weinheim (DE)**

(72) Erfinder:
- **Hamaekers, Arno
W-6946 Gorxheimertal (DE)**
- **Rudolph, Axel
W-6100 Darmstadt (DE)**

(56) Entgegenhaltungen:
EP-A- 0 009 120      EP-A- 0 066 815
DE-A- 2 726 676      DE-C- 0 156 308
FR-A- 812 722        GB-A- 1 570 751

- **PATENT ABSTRACTS OF JAPAN vol. 6, no. 1
(M-105)(879) 7. Januar 1982 & JP-A-56 124 739
(TOYODA GOSEI K.K.) 30.September 1981**

**Beschreibung**

Die Erfindung betrifft eine überwiegend in einer Richtung belastbare Hülsengummifeder, umfassend zwei einander in achsparalleler Zuordnung umschließende Stützkörper, die durch einen Federkörper aus Gummi aufeinander abgestützt sind, wobei der Federkörper an den inneren Stützkörper anvulkanisiert ist, wobei der innere Stützkörper entgegen der Belastungsrichtung verlagert angeordnet ist und wobei die Verlagerung so bemessen ist, daß sich nach dem Aufbringen der bestimmungsgemäß zu tragenden Last im schwingungsfreien Zustand die Arbeitsposition der beiden Stützkörper zueinander ergibt, wobei der Federkörper in dem Bereich hinter einer sich quer zu der Belastungsrichtung durch die Mitte des inneren Stützkörpers erstreckenden, gedachten ersten Ebene eine größere Tragfähigkeit in Belastungsrichtung aufweist als in dem Bereich davor und wobei die Zuordnung des inneren Stützkörpers zu dem äußeren Stützkörper vor dem Aufbringen der zu tragenden Last durch eine elastische Zusammenpressung des Federkörpers zwischen den Stützkörpern bestimmt ist.

Eine solche Hülsengummifeder ist aus der EP 0 066 815 A3 bekannt. Die Hülsengummifeder umfaßt einen Federkörper mit drei Teilkörpern, wobei sich einer der Teilkörper parallel zur Belastungsrichtung erstreckt, während die anderen beiden Teilkörper sich im wesentlichen quer zur Belastungsrichtung erstrecken. Die Teilkörper verbinden jeweils den inneren Stützkörper mit dem im herstellungsbedingten Zustand dazu relativ exzentrisch angeordneten äußeren Stützkörper der Hülsengummifeder. Der Teilkörper, der parallel zur Belastungsrichtung angeordnet ist, weist eine größere radiale und axiale Erstreckung auf, als die beiden übereinstimmend ausgebildeten Teilkörper, die sich quer zu Belastungsrichtung erstrecken. Der Federkörper ist mit dem inneren und äußeren Stützkörper vulkanisiert, wobei nach dem Aufbringen der bestimmungsgemäß zu tragenden Last die Stützkörper einander im wesentlichen konzentrisch zugeordnet sind. Die vulkanisationsbedingten Zugspannungen des sich parallel zur Belastungsrichtung erstreckenden Teilkörpers werden dadurch ausgeglichen und in eine Druckvorspannung umgewandelt, im Gegensatz zu den herstellungsbedingten Zugspannungen innerhalb der sich quer zu Belastungsrichtung erstreckenden Teilkörper. Die gebauchsdauerverringernden Zugspannungen bleiben hier während der Verwendung der Hülsengummifeder erhalten.

Aus der DE PS 156308 ist eine Hülsengummifeder, insbesondere zur Lagerung von Flugzeugmotoren bekannt, die geeignet ist, radiale und axiale Belastungen aufzunehmen. Zur Erzielung guter Gebrauchseigenschaften für diesen Anwendungsfall ist es vorgesehen, daß die Haftfläche zwischen dem Federkörper und dem äußeren Stützkörper gleich ist der Haftfläche zwischen dem Federkörper und dem inneren Stützkörper. Der innere Stützkörper und der Federkörper sind in axialer Richtung mittig, senkrecht zur Achse der Hülsengummifeder geteilt und spiegelbildlich zueinander ausgebildet. Bei der Montage der Hülsengummifeder werden die in axialer Richtung einander mit Abstand benachbarten Teilkörper des Federkörpers der inneren Stützhülse in axialer Richtung zusammengeschoben, wobei sich eine radiale und axiale Vorspannung des Federkörpers zwischen den Stützkörpern, in Abhängigkeit von der Geometrie und Werkstoffauswahl des Federkörpers, einstellt.

Eine weiter Hülsengummifeder ist aus der EP-A 0 009 120 bekannt. Der Federkörper ist dabei außenseitig durch Vulkanisierung mit einem zylindrischen Zwischenrohr verbunden und innenseitig mit einem Innenrohr, wobei das Zwischenrohr dem Innenrohr exzentrisch zugeordnet ist. Der Einbau der Hülsengummifeder ist so vorgesehen, daß die herstellungsbedingte Exzentrizität durch die bestimmungsgemäß zu tragende Last ausgeglichen wird. Die anschließend erzielte Relativbeweglichkeit des inneren Stützkörpers ist hierdurch zwar in allen Richtungen gleich groß, in dem der Belastungsrichtung entgegengesetzten Teilabschnitt des Federkörpers resultieren jedoch Zugspannungen, die eine Beeinträchtigung der Dauerhaltbarkeit bedingen.

Aus der GB-A-1 206 895 und der DE-U 69 42 756 sind Hülsengummifedern bekannt, bei denen der innere Stützkörper dem äußeren Stützkörper konzentrisch zugeordnet und der Federkörper in jedem Teilbereich seiner Umfangserstreckung in einer im wesentlichen übereinstimmenden Weise vorgespannt ist. Nach dem Aufbringen der bestimmungsgemäß zu tragenden, statischen Vorlast resultiert hieraus eine exzentrische Zuordnung des inneren Stützkörpers zu dem äußeren Stützkörper, was eine Beeinträchtigung der Relativbeweglichkeit in einer Richtung bedingt. Darüber hinaus können sich in dem der Belastungsrichtung entgegengesetzten Bereich Zugspannungen in dem Federkörper ergeben, was die Gebrauchsdauer beeinträchtigt.

Der Erfindung liegt die Aufgabe zugrunde, eine Hülsengummifeder der eingangs genannten Art zu zeigen, bei der in dem Federkörper nach der Aufbringung der bestimmungsgemäß zu tragenden Last im wesentlichen keine Zugspannungen wirksam sind, bei der die beiden Stützkörper in jeder Richtung eine Relativbeweglichkeit von im wesentlichen übereinstimmender Größe haben und bei der in beiden axialen Richtungen voneinander abweichende Federsteifigkeiten erzielbar sind.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Bei der erfindungsgemäßen Hülsengummifeder ist es vorgesehen, daß der Federkörper in Gestalt von Teilkörpern erzeugt ist, die einen radial nach außen zunehmenden, axialen Abstand voneinander haben und daß der Abstand durch eine gegeneinander gerichtete Verspannung der Teilkörper in der fertig montierten Hülsengummifeder im wesentlichen eliminiert ist, daß die Teilkörper eine voneinander abweichende Länge in axialer Richtung haben und daß das Profil des durch den Abstand gebildeten Spalts der Achse der Hülsengummifeder geneigt zugeordnet ist.

Um in den beiden axialen Richtungen voneinander abweichende Federsteifigkeiten zu erhalten kann der Spalt in axialer Richtung aus der Mitte der Hülsengummifeder herausverlagert werden oder voneinander abweichende Federsteifigkeiten lassen sich erhalten, in dem das V-förmige Profil des Spalts der Achse der Hülsengummifeder in geneigter Weise zugeordnet ist.

Gemäß einer Ausgestaltung kann es vorgesehen sein, daß der Federkörper auf der von dem inneren Stützkörper abgewandten Seite in Flächen endet, die den inneren Stützkörper in im wesentlichen übereinstimmenden Abständen umschließen.

Die durch die Zusammenpressung bewirkte Ausweichbewegung des inneren Stützkörpers in einer der Belastungsrichtung entgegengesetzten Richtung wird durch das Aufbringen der bestimmungsgemäß aufzunehmenden, statischen Vorlast kompensiert, wodurch die Stützkörper anschließend einander im wesentlichen konzentrisch zugeordnet sind. Die Relativbeweglichkeit der beiden Stützkörper ist dadurch in jeder Richtung gleich groß. Darüber hinaus sind in dem Federkörper nach dem Aufbringen der Vorlast keine radialen Zugspannungen wirksam. Die Dauerhaltbarkeit der Hülsengummifeder ist hierdurch wesentlich verbessert.

Der Federkörper kann in radialer Richtung zusammengepreßt sein, was während des Einfügens in den äußeren Stützkörper besonders einfach realisierbar ist.

Ergänzend oder alternativ ist es auch möglich den Federkörper in axialer Richtung zusammenzupressen.

Hierdurch ist es möglich, positive Druckspannungen in dem Gummikörper zu erzeugen, was die Erzielung gleichbleibender Gebrauchseigenschaften über eine besonders lange Gebrauchsdauer ermöglicht.

Die Stauchung des Federkörpers soll einerseits wenigstens so groß sein, daß die herstellungsbedingten Schrumpfspannungen beseitigt sind, sie soll andererseits Werte nicht übersteigen, bei denen während der bestimmungsgemäßen Verwendung der Hülsengummifeder eine Schädigung oder Zerstörung des Federkörpers zu erwarten ist. Der im einzelnen zur Anwendung gelangende Stauchungsgrad wird durch die lineare Stauchung ausgedrückt.

Diese läßt sich nach der Formel

$$\Delta L/L$$

errechnen, in welcher $\Delta L$ die Kürzung des Federkörpers in einer bestimmten Richtung angibt und L die zugehörige Länge im ungestauchten Zustand.

In Fällen, in denen der Federkörper in Achsrichtung der Hülsengummifeder ausschließlich durch sich senkrecht zu seiner Achse erstreckende Flächen begrenzt sind, erfolgt die Stauchung regelmäßig nur in radialer Richtung. Die Ermittlung der linearen Stauchung ergibt sich in diesem Falle auf der Grundlage der Ausdehnungsverminderung in radialer Richtung. Ein davon abweichender Fall ist gegeben, wenn der Federkörper herstellungsbedingt eine erfindungsgemäße Gestalt aufweist, in welcher der Federkörper in Gestalt von Teilkörpern erzeugt ist, die einen radial nach außen zunehmenden, axialen Abstand voneinander haben und daß der Abstand durch eine gegeneinander gerichtete Verspannung der Teilkörper in der fertig montierten Hülsengummifeder im wesentlich eliminiert ist, so daß sie anschließend der Achse der Hülsengummifeder im wesentlichen senkrecht zugeordnet sind. Der Ermittlung der linearen Stauchung wird in diesem Falle die tatsächliche Längenverminderung der Schrägflächen zugrunde gelegt, welche diese während ihrer Überführung in eine Position erfahren, in der sie der Achse der Hülsengummifeder im wesentlichen senkrecht zugeordnet sind.

Für die Herstellung des Federkörpers kann irgendeine der einschlägig angewandten Gummiqualitäten verwendet werden, zweckmäßig eine solche mit einer Härteshore A 30 bis 80.

Die lineare Stauchung sollte in Anwendungsfällen, in denen eine statische Vorlast nicht abzutragen ist, zweckmäßig zwischen 5 und 10 % liegen. Neben einer guten Gebrauchsdauer wird in diesem Falle eine besonders gute Isolierung der eingeleiteten Schwingungen erreicht.

In Anwendungsfällen, in denen es demgegenüber mehr auf die Erzielung einer verbesserten Dämpfungswirkung bei Einleitung von Schwingungen ankommt sowie auf eine erhöhte Steifigkeit hinsichtlich der gegenseitigen Zuordnung der einander umschließenden Stützkörper hat sich demgegenüber die Anwendung einer größeren linearen Stauchung vorteilhaft bewährt, wobei Werte von 20 bis 40 % ohne weiteres erreicht werden können. Wechsellasten aus entgegengesetzten Richtungen werden von solchen Ausführungen sicher und unter Vermeidung von störenden Zugspannungen in irgendeinem Teilbereich des Federkörpers aufgefangen. Die Anwendung entsprechender Hülsengummifedern empfiehlt sich daher vor allem in Fällen, in denen extreme Belastungssituationen zu erwarten sind, beispielsweise im Bereich der Achsaufhängung von Kraftfahrzeugen.

Der Federkörper kann herstellungsbedingt zumindest zwei in Umfangsrichtung beabstandete, in Gestalt der Teilkörper erzeugte Stege aufweisen, wobei diese eine voneinander abweichende Breite und/oder Länge in Achsrichtung haben können, das heißt einen von einander abweichenden Querschnitt.

Der Federkörper ist in Fällen, in denen mehrere Stege vorhanden sind, bezogen auf eine parallel zur Belastungsrichtung in der Mitte angeordneten, gedachten Ebene zumeist spiegelbildlich gestaltet.

Die optimale gegenseitige Zuordnung der im Regelfalle vorhandenen vier Stege kann durch Versuche ermittelt werden. Für Anwendungen im Bereich der Aufhängung von Kfz-Achsen hat es sich bewährt, wenn die vor und hinter einer quer zur Belastungsrichtung durch die Mitte des inneren Stützkörpers geführten, gedachten ersten Ebene Stege vorgesehen sind, die mit einer parallel zur Belastungsrichtung in der Mitte des inneren Stützkörpers errichteten, gedachten zweiten Ebene einen spitzen Winkel einschließen, wobei die vor der ersten Ebene angeordneten Stege mit der zweiten Ebene einen größeren Winkel einschließen als die hier der zweiten Ebene angeordneten Stege eine sich parallel zur Belastungsrichtung durch die Mitte erstreckende Ebene spiegelbildlich ausgebildet ist und wenn die vor der ersten Ebene angeordneten Stege schließen zweckmäßig miteinander einen Winkel von 30 bis 60° und die hinter der ersten Ebene angeordneten Stege miteinander einen Winkel von 120 bis 150° ein. Naben einer guten Tragfähigkeit in senkrechter Richtung wird in diesem Falle eine für das angesprochene Anwendungsgebiet ausgezeichnete Führung des inneren Stützkörpers in dem äußeren Stützkörper erzielt, was von großem Vorteil ist.

Der äußere der beiden Stützkörper besteht im Regelfalle ebenfalls aus einem in sich geschlossenen Rohr. In Hinblick auf eine Vereinfachung der Einfügung des Federkörpers in den äußeren Stützkörper, welche in axialer Richtung durch Einschieben vorgenommen wird, hat es sich als vorteilhaft bewährt, wenn der Federköper auf den radial nach außen weisenden Flächen mit Metallauflagen versehen ist. Letztere können aus Blech bestehen und sind auf ihrer Außenseite zweckmäßig der Form der Innenseite des äußeren Stützkörpers angepaßt.

Die Stege können im Bereich der stirnseitigen Abschlußwände außenseitig an metallischen Stirnringen festgelegt sein, welche in der fertigen Hülsengummifeder auf der von den Stegen abgewandten Seite von nach innen weisenden Vorsprüngen des äußeren Stützkörpers umgriffen sind. Die Stirnringe haben einen Außendurchmesser, der mit dem Innendurchmesser des äußeren der Stützkörper im wesentlichen übereinstimmt.

Sie gewährleisten eine besonders formstabile, gegenseitige Zuordnung zwischen den unabhängig voneinander gefertigten Einzelteilen der erfindungsgemäßen Hülsengummifeder. Die Stirnringe können gemeinsam mit dem äußeren Stützkörper Segmente von Ringkanälen begrenzen, wobei die Ringkanäle einen Bestandteil der Verbindungsöffnungen bilden, welche mindestens zwei voneinander verschiedene Kammern der erfindungsgemäßen Hülsengummifeder flüssigkeitsleitend verbinden. Es ist ganz selbstverständlich, daß für eine gute Abdichtung der Stirnringe gegenüber dem äußeren Stützkörper Sorge getragen werden muß, was beispielsweise durch eine Dichtlippe aus Gummi erfolgen kann, welche während der Festlegung in dem äußeren Stützkörper bleibend unter einer Vorspannung an die abzudichtenden Flächen angepreßt wird. Eine Oberflächenbeschichtung aus Gummi kann gegebenenfalls die anderen Oberflächenanteile der Stirnringe überziehen und vermag hier das Auftreten von Korrosionserscheinungen zu verhindern. Sie bildet zweckmäßig einen einstückigen Bestandteil des Federkörpers aus Gummi.

Die die Stege außenseitig abschließenden Bleche und wenigstens einer der Stirnringe können einteilig verbunden sein. Die richtige Zuordnung zu den Stegen während deren Herstellung und Verfestigung läßt sich hierdurch wesentlich vereinfachen.

Der Federkörper kann im mittleren Bereich seiner axialen Länge herstellungsbedingt eine größere radiale Erstreckung haben als im Bereich der stirnseitigen Enden, was eine relativ vergrößerte Verspannung im mittleren Bereich der Hülsengummifeder ergibt. Eine kegelige Zunahme der radialen Erstreckung in Richtung des mittleren Teils der axialen Länge der Hülsengummifeder hat sich besonders bewährt und läßt sich besonders einfach montieren in einem äußeren Stützkörper, der etwa in der Mitte ihrer axialen Erstreckung geteilt erzeugt ist.

Der Gegenstand der vorliegenden Erfindung wird nachfolgend anhand der als Anlage beigefügten Zeichnungen weiter erläutert. Es zeigen:

Figur 1    eine Hülsengummifeder in längsgeschnittener Darstellung;

Figur 2    den aus dem äußeren Stützkörper gemäß Figur 1 entnommenen Federkörper einschließlich des inneren Stützkörpers in quergeschnittener Darstellung;

Figur 3    den in Figur 4 gezeigten Federkörper in einer seitlichen Ansicht;

Figur 4    das Einfügen einer beispielhaften Ausführung des Federkörpers aus Gummi einschließlich des inneren Stützkörpers in den äußeren Stützkörper;

Figur 5    das Einfügen einer anderen, beispielhaften Ausführung des Federkörpers aus Gummi einschließlich des inneren Stützkörpers in den äußeren Stützkörper;

Figuren 6 bis 13   andere Profilausbildungen des Federkörpers der Hülsengummifeder sowie ein Belastungsdiagramm.

Figuren 14 bis 15   zwei Ausführungen von Hülsengummifedern, bei denen der Federkörper in axialer Richtung so unterteilt ist, daß sich während seiner Stauchung eine Relativverlagerung der beiden Stützkörper in axialer Richtung ergibt.

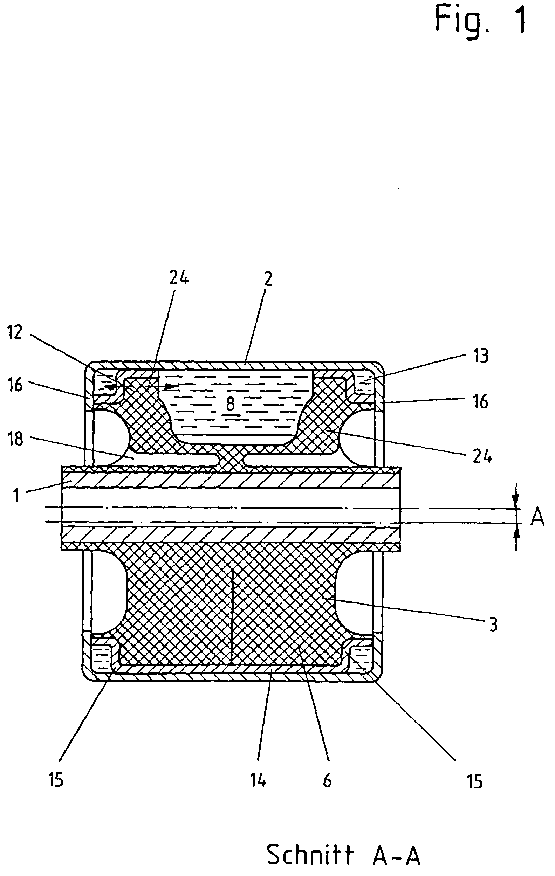

Die Fig. 1 bis 5 und 14 sind vom Schutzbereich des Anspruchs 1 nicht umfaßt.

Die in Figur 1 wiedergegebene Hülsengummifeder besteht aus einem Federkörper 3 aus Gummi, der durch Vulkanisation mit dem inneren Stützkörper 1 verbunden und unter radialer Stauchung in den äußeren Stützkörper 2 eingefügt ist. Der innere und der äußere Stützkörper 1, 2 bestehen aus Rohren aus Metall. Sie dienen dem Anschluß sekundärer Maschinenteile an die dargestellte Hülsengummifeder, beispielsweise der Anschlußteile einerseits der Achse und andererseits der Karosserie eines Kraftfahrzeugs. Das für die Herstellung des Federkörpers 3 verwendete Gummi ist eine übliche Qualität. Es hat eine Härte Shore A von 50. Die Stützkörper wurden durch Rohre gebildet.

Die Rohre haben ein rotationssymmetrisch begrenztes Profil. Die Verwendung von Rohren mit einem abweichenden Profil ist jedoch ebenfalls möglich, beispielsweise mit einem drei-, vier-, fünfoder sechseckigen Profil, mit einem kreisförmig oder ovalbegrenzten Profil oder von Ubergangformen zwischen wenigstens zwei der vorgenannten Profilformen.

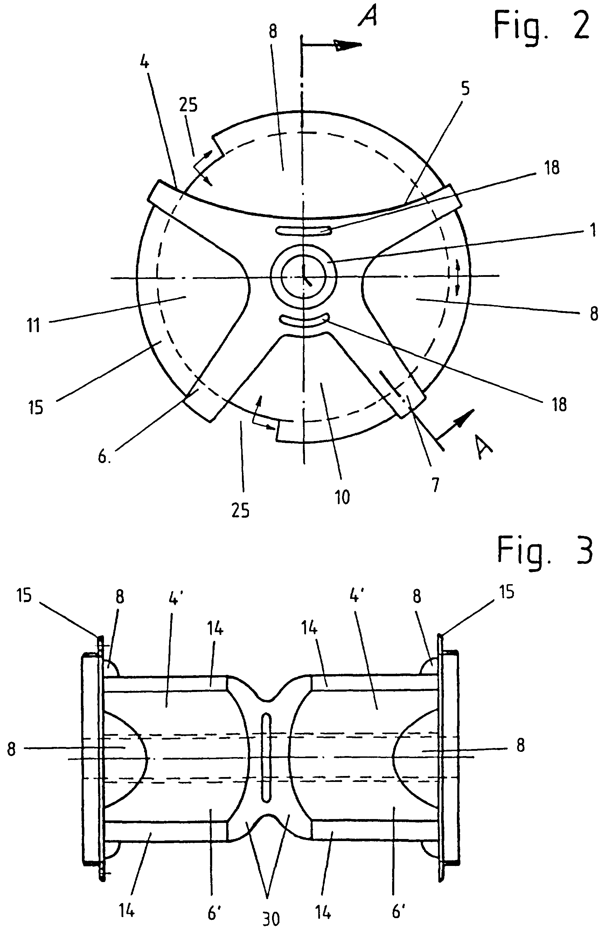

Der Federkörper 3 weist vier im wesentlichen radial nach außen vorspringende Stege 4, 5, 6, 7 auf. Die Stege 6, 7 sind in Umfangsrichtung breiter als die Stege 4, 5. Sie umschließen gemeinsam mit dem äußeren Stützkörper 2 und den stirnseitigen Abschlußwänden 24 flüssigkeitsgefüllte Kammern, von denen in Figur 1 die Kammer 8 erkennbar ist und alle Kammern 8, 10, 9, 11 in Figur 2. Die Kammern 8, 10 sind durch eine Verbindungsöffnung 12 verbunden, welche in einem Teilbereich kanalartig ausgebildet ist und in diesem Teilbereich einerseits durch das Profil des dort angeordneten Stirnringes 15 und andererseits durch das entgegengesetzt abgewickelte Profil 16 des äußeren Stützkörpers 2 umschlossen ist.

Aussparungen 25 des in radialer Richtung nach außen weisenden Schenkels des entsprechenden Stirnrings 15 stellen dabei des Flüssigkeitsübertritt zwischen dem Kanal und den Kammern 8bzw. 10 sicher. Zwischen beiden kann folglich Flüssigkeit unter Erzielung einer Dämpfungswirkung hin- und herbewegt werden, wenn sich eine Relativverlagerung des inneren Stützkörpers 1 in dem äußeren Stützkörper 2 ergibt.

Ein entsprechend wirksamer Kanal 13 ist auch am entgegengesetzten, axialen Ende der Hülsengummifeder vorhanden. Dieser verbindet die linke Kammer 11 mit der in gleicher, horizontaler Ebene rechts angeordnete Kammer 9. Die die Kammern stirnseitig begrenzenden Abschlußwände 24 sind von federnder Beschaffenheit. Bei Einleitung tieffrequenter Schwingungen großer Amplitude ergibt sich als Folge hiervon eine Druckdifferenz in den einzelnen Kammern der Hülsengummifeder, was zur Hindurchpressung von Flüssigkeit durch die die Kammern verbindende Verbindungsöffnungen führt und zur Erzielung einer großen Dämpfungswirkung. Der Isolierung hochfrequenter Schwingungen kleiner Amplitude dienen die dünnen Membranwände, welche die Ausnehmungen 18 von den Kammern 8 und 10 trennen. Die Ausnehmungen können nicht nur sacklochartig, sondern auch ganz durchgehend ausgebildet sein, wobei in beiden Fällen letztlich die Größe der Erstreckung quer zur Krafteinleitungsrichtung in Verbindung mit dem Abstand der einander in Krafteinleitungsrichtung gegenüberliegenden Wandungen die Größe der kleinen Amplitude isolierter Schwingungen definiert und von der großen Amplitude gedämpfter Schwingungen abgrenzt. Die sich in bezug auf die Isolierung hochfrequenter Schwingungen ergebenden Eigenschaften sind dementsprechend ebenso ausgezeichnet wie die Dämpfungseigenschaften in bezug auf tieffrequente Schwingungen. Als Flüssigkeit gelangt in der Hülsengummifeder ein Gemisch aus Glykol und Wasser zur Anwendung.

Die metallischen Teile der Hülsengummifeder sind daher zur Vermeidung von Korrosionserscheinungen mit einer korrosisionsverhindernden Oberflächenbeschichtung versehen, zweckmäßig einer solchen aus Basis von Gummi.

Bei einer in der Zeichnung nicht dargestellten Ausführungsform ähnlich der vorstehend beschriebenen ist es vorgesehen, die einander in Kraftwirkungsrichtung gegenüberliegenden Kammern 8, 10 stirnseitig durch elastisch ausgebildete Abschlußwände 24 von membranartig dünner Beschaffenheit zu begrenzen.

Eine entsprechende Ausbildung empfiehlt sich für Anwendungsfälle, in denen die in Kraftrichtung eingeleiteten Schwingungen einer stärkeren Bedämpfung bedürfen als Schwingungen, die quer zu dieser Richtung in die Hülsengummifeder eingeleitet werden. Ein entsprechender Anwendungsfall ist beispielsweise gegeben, wenn in senkrechter Richtung fahrbahnerregte Schwingungen in die Hülsengummifeder eingleitet werden und quer zu dieser Richtung motorerregte, hochfrequente Schwingungen kleiner Amplitude. Die motorerregten Schwingungen können bei dieser Ausführung nicht zum Auftreten von wesentlichen Druckdifferenzen in der quer zu Krafteinleitungsrichtung einander gegenüberliegenden Kammern führen. In bezug auf die in senkrechter Richtung eingeleiteten Schwingungen großer Amplitude ergibt sich der vorstehend beschriebene Dämpfungseffekt, der auf der Hindurchpressung von Flüssigkeitsbestandteilen durch die Verbindungsöffnung zwischen den senkrecht übereinanderliegenden Kammern 8, 10 beruht.

Die bei der Herstellung erzeugte Gestalt des Federkörpers aus Gummi wird durch Figur 2 verdeutlicht. Sie zeigt den in Figur 1 in fertig montiertem Zustand dargestellten Federkörper in einer aus dem äußeren Stützkörper 2 entnommenen Form in quergeschnittener Darstellung. Es ist deutlich zu erkennen, daß die radiale Erstreckung der Stege 4, 5, 6, 7 diejenige des unsichtbar gezeichneten Stirnringes 15 übertrifft. Letzterer hat einen Außendurchmesser, der mit dem Innendurchmesser des äußeren Stützkörpers 2 übereinstimmt.

Das Einfügen des gezeigten Federkörpers in den äußeren Stützkörper 2 setzt folglich eine radiale Stauchung und damit positive Vorspannung des Federkörpers 3 und insbesondere der Stege 4, 5, 6 und 7 voraus. Die Dauerhaltbarkeit erfährt dadurch in fertig montiertem Zustand eine deutliche Steigerung. Es ist des weiteren zu erkennen, daß die Stege 4, 5, 6, 7 einer in der Achse des inneren Stützkörpers 1 errichtete, gedachten senkrechten Ebene spiegelbildlich zugeordnet sind.

Die oberhalb der Mittellinie des inneren Stützkörpers 1 angeordneten Stege 4, 5 schließen dabei einen größeren Winkel miteinander ein als die unteren Stege 6, 7. Letztere haben zusätzlich eine größere Erstreckung in Umfangsrichtung als die Stege 4,5. Die radiale Erstreckung ist in allen Fällen übereinstimmend. Die die Stege 4, 5, 6, 7 nach ihrer Herstellung außenseitig begrenzenden Bleche 14 haben somit vor dem Einfügen in den äußeren Stützkörper 2 einen übereinstimmenden Abstand von dem inneren Stützkörper 1. Die diesbezügliche Situation ändert sich während des Einfügens in den äußeren Stützkörper 2. Der entsprechende Vorgang hat nämlich die Ausübung übereinstimmender Kräfte in radialer Richtung auf jeden einzelnen der Stege 4, 5, 6, 7 zur Folge, was wegen der flacheren Neigung des Stege 4, 5 in bezug auf die Neigung der Stege 6, 7 sowie des größeren Querschnitts der letzteren eine senkrecht nach oben gerichtete Relativverlagerung A (Figur 1) des inneren Stützkörpers 1 in dem äußeren Stützkörper 2 und somit eine exzentrische Zuordnung bewirkt.

Der Effekt wird ausgenutzt zur lagemäßigen Kompensierung der in senkrechter Richtung auf den inneren Stützkörper 1 aufgebrachten statischen Vorlasten, welche sich bei richtiger Abstimmung der gegenseitigen Zuordnung der Stege 4, 5, 6, 7 zur Umfangsrichtung sowie bei richtiger gegenseitiger Abstimmung der Querschnitte ergibt. Unter der Wirkung der aufzunehmenden Last wird somit wiederum eine völlig konzentrische Zuordnung zwischen den beiden Stützkörpern 1, 2 erreicht. Figur 1 zeigt die Hülsengummifeder in unbelastetem Zustand. Die sich infolge der Stauchung des Federkörpers ergebende Relativverlagerung A der Stützkörper ist ebenfalls eingetragen. In Figur 3 ist der in Figur 2 quergeschnitten gezeigte Federkörper 3 in einer Ansicht von der Seite dargestellt. Hierdurch soll verdeutlicht werden, daß der Federkörper so erzeugt ist, daß die Stege 4, 5, 6, 7 jeweils aus Teilstegen 4'; 5'; 6'; 7' bestehen, die etwa im mittleren Bereich ihrer axialen Erstreckung einen gegenseitigen, axialen Abstand voneinander haben, der in radialer Richtung nach außen zunimmt.

Der Abstand wird während der Einfügung des Federkörpers in den äußeren Stützkörper im wesentlichen eliminiert, so daß dann die einander zugewandten Stirnflächen 30 der Teilstege 4'. 5', 6', 7' in eine gegenseitige abdichtende Anlage gelangen. Im fertig montierten Zustand des Federkörpers in dem äußeren Stützkörper kann daher Flüssigkeit den durch den Abstand gebildeten Spalt zumindest nicht in funktionsstörendem Maße passieren. Zweckmäßig ist der Spalt zur Gänze abgedichtet, was durch Aneinanderpressung der einander in axialer Richtung gegenüberliegenden Stirnflächen 30 der Stege 4', 5', 6', 7' bewirkt werden kann.

Die einfachste Möglichkeit zur Erreichung eines entsprechenden Effekts besteht in einer entsprechenden maßlichen Abstimmung zwischen der herstellungsbedingten Länge des aus Gummi bestehenden Federkörpers 3 mit der axialen Länge des den Federkörper letztlich aufnehmenden äußeren Stützkörpers 2. Die Abschlußwände 24 sind in der gezeigten, herstellungsbedingten Gestalt konvex nach innen durchgewölbt. Sie erfahren ebenso wie die Teilstege 4', 5', 6', 7' während der Montage des Federkörpers in der Außenhülse 2 eine Deformierung, die der in Figur 1 gezeigten Gestalt im wesentlichen entspricht. Die Teilstege 4', 5', 6', 7' sind auf ihrer in radialer Richtung nach außen weisenden Seite mit durch Vulkanisierung festgelegten Metallauflagen 14 versehen. Diese werden durch Bleche gebildet und haben eine geringfügig kleinere Erstreckung als die Teilstege 4', 5', 6', 7'. Sie sind radial außenseitig an die Form der Innenwandung des äußeren Stützkörpers 2 angepaßt.

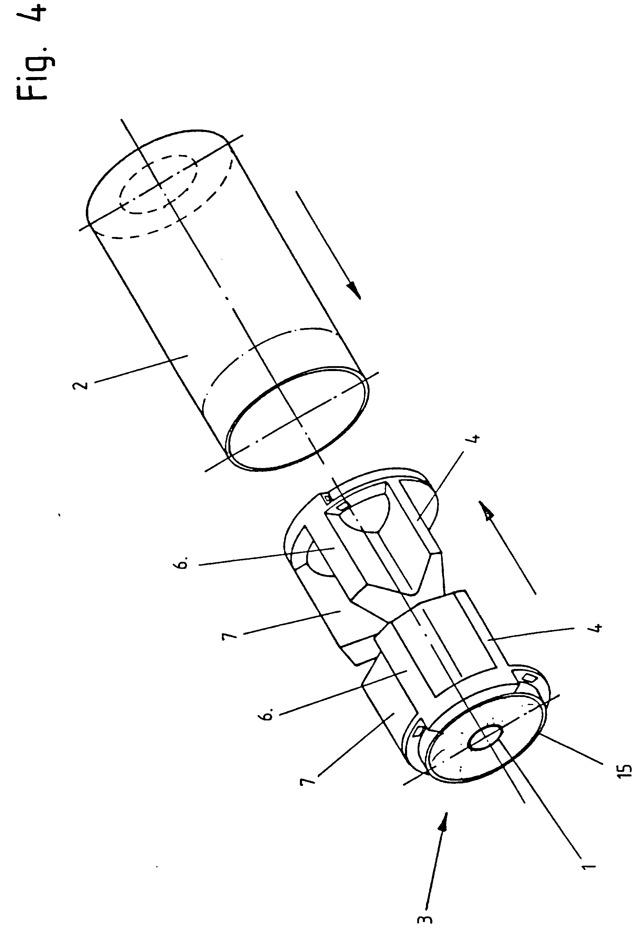

Das Einfügen des in den Figuren 2 und 3 gezeigten Gummikörpers in den äußeren Stützkörper 2 wird durch Figur 4 verdeutlicht. Um eine vollständige Füllung der enthaltenen Kammern mit Flüssigkeit zu erreichen, erfolgt der Fügevorgang zweckmäßig in einem untergetauchten Zustand. Der zur Anwendung gelangende, äußere Stützkörper 2 besteht aus einem Rohr aus Metall.

Dieser weist am rechten Ende einen nach innen gerichteten Flanschvorsprung auf, der beispielsweise durch ein Einbördelung erzeugt werden kann. Das linke Ende ist axial geöffnet, so daß der Gummikörper 3 einschließlich des durch Vulkanisation darin festgelegten, inneren Stützkörpers 1 bis zum Anschlagen seines rechten Endes an den Flanschvorsprung des äußeren Stützkörpers eingeschoben werden kann. Die Relativverschiebung wird so lange fortgesetzt, bis sich neben einer elastischen Reduzierung der radialen Erstreckung der Teilstege 4, 5, 6, 7 eine gegenseitige Verpressung von deren in axialer Richtung gegenüberliegenden Stirnfläche 30 ergibt.

Der Fügevorgang wird abgeschlossen durch Erzeugung einer nach innen gerichteten Einbördelung auch am linken Ende des äußeren Stützkörpers 2. Die Einbördelung kann dem am rechten Ende bereits vorher vorhandenen, ringförmigen Flanschvorsprung entsprechen. Sie berührt schließlich die axiale Abschlußkante des vorderen Stirnrings 15 ebenso unter dichtendem Kontakt wie der am rechten Ende des äußeren Stützkörpers 2 vorhandene Flanschvorsprung die Abschlußkante des dort vorhandenen, weiteren Stirnrings 15. Die einzelnen Kammern und Verbindungsöffnungen der funktionsfähigen Hülsengummifeder sind dadurch nicht nur vollständig mit Flüssigkeit gefüllt, sondern auch flüssigkeitsdicht nach außen abgeschlossen. Eine unmittelbare Inbetriebnahme ist daher ohne weiteres möglich.

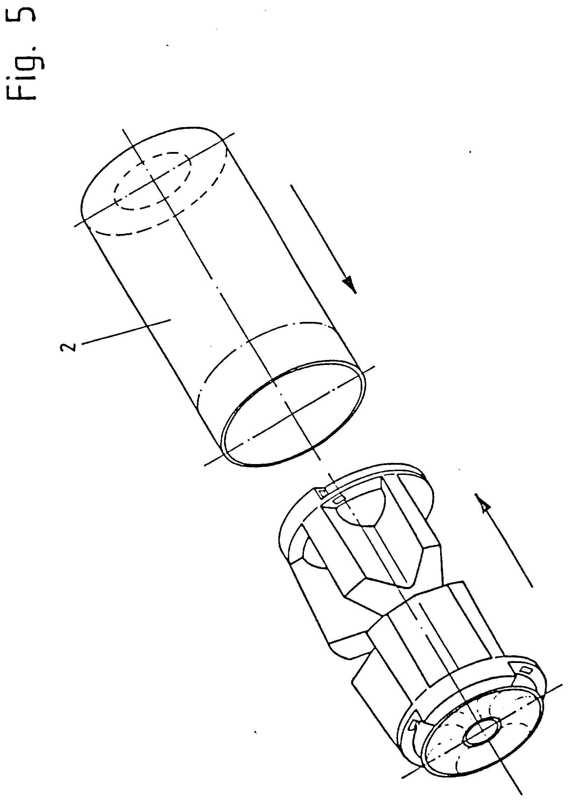

Der in Figur 5 gezeigte Fügevorgang entspricht dem vorstehend beschriebenen in allen Einzelheiten. In diesem Falle gelangt indessen ein Federkörper aus Gummi zur Anwendung, bei dem die Teilstege axial in Richtung der Mitte des Federkörpers eine vergrößerte Erstreckung in radialer Richtung haben. Im Vergleich zu dem vorstehend beschriebenen Fügevorgang ergibt sich dadurch eine größere radiale Stauchung im mittleren Bereich.

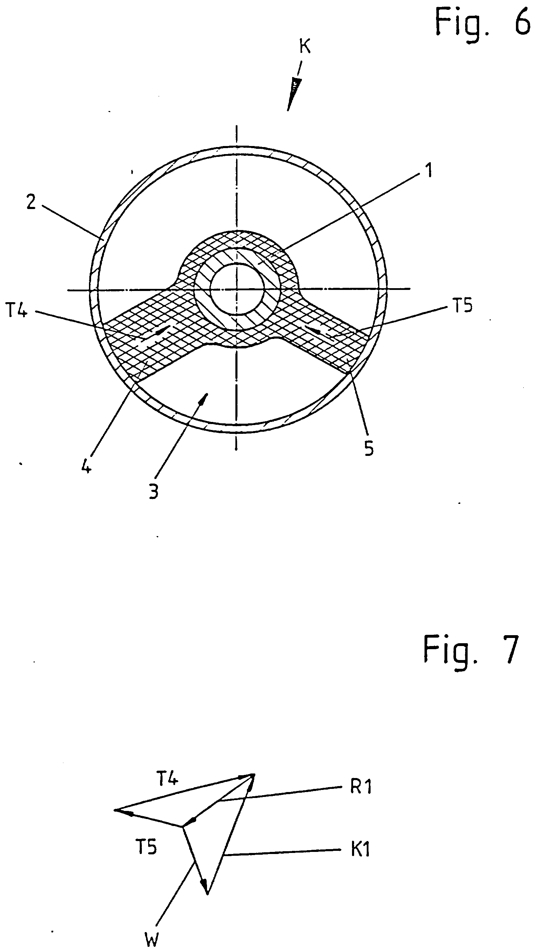

Die in Figur 6 gezeigte erfindungsgemäße Hülsengummifeder besteht aus den beiden Stützkörpern 1, 2 die durch Rohre gebildet werden und einander konzentrisch umschließen. Sie sind durch den Federkörper 3 aus Gummi verbunden. Dieser ist, bezogen auf die Richtung der aufzunehmenden Kraft K, unsymmetrisch ausgebildet und besteht im wesentlichen aus den beiden Stegen 4, 5. Diese sind säulenähnlich auf den Mittelpunkt des inneren Stützkörpers ausgerichtet und haben eine axiale Länge, die mit derjenigen der inneren und der äußeren der Stützkörper 1, 2 im wesentlichen übereinstimmt. Die Breite des Stegs 4 in Umfangsrichtung ist etwa doppelt so groß wie diejenige des Stegs 5. Die radiale Tragfähigkeit des Stegs 4 ist dementsprechend größer.

Das zugehörige Belastungsdiagramm ist in Figur 7 gezeigt, wobei deutlich zu ersehen ist, daß die resultierenden R1 der Tragfähigkeiten T4 und T5 der Stege 4, 5 eine von der Richtung der aufzunehmenden Kraft K abweichende Richtung aufweist. Die Ausweichbewegung des inneren Stützkörpers wird sich daher nach dem Aufbringen einer entsprechenden Kraft nicht in deren Richtung vollziehen, sondern in einer davon abweichenden Richtung.

Einzelheiten sind aus Figur 7 entnehmbar, wobei vorausgesetzt ist, daß die abzutragende Last K1 so groß bemessen ist, daß sich die Hülsengummifeder im Gleichgewichtszustand befindet. Die Ausweichbewegung des inneren Stützkörpers 1 vollzieht sich danach in der Richtung des mit W bezeichneten Pfeils.

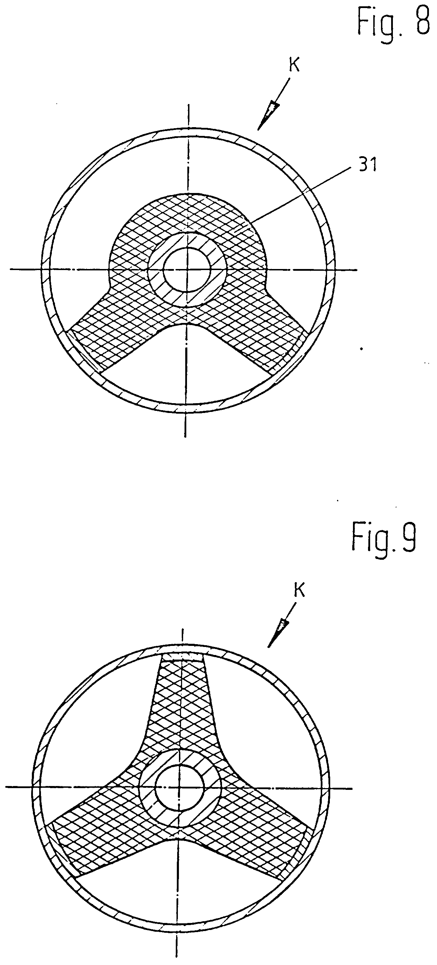

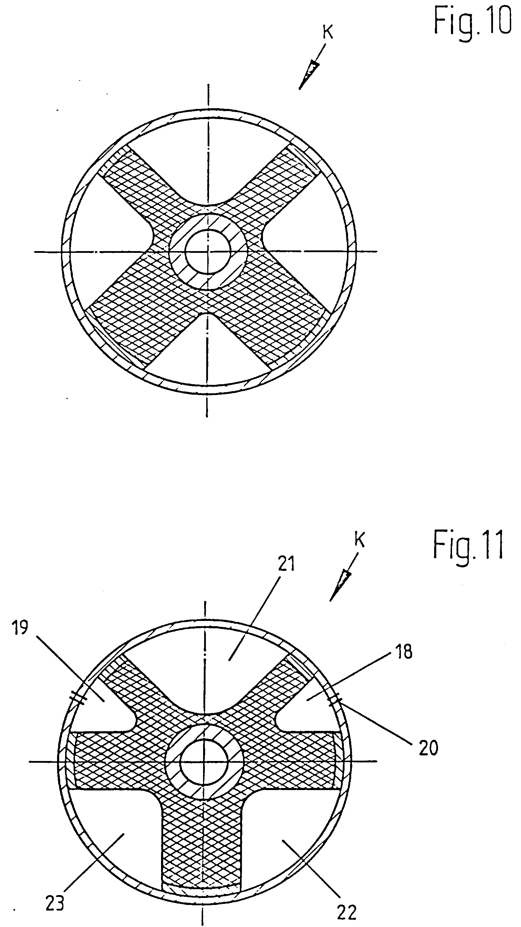

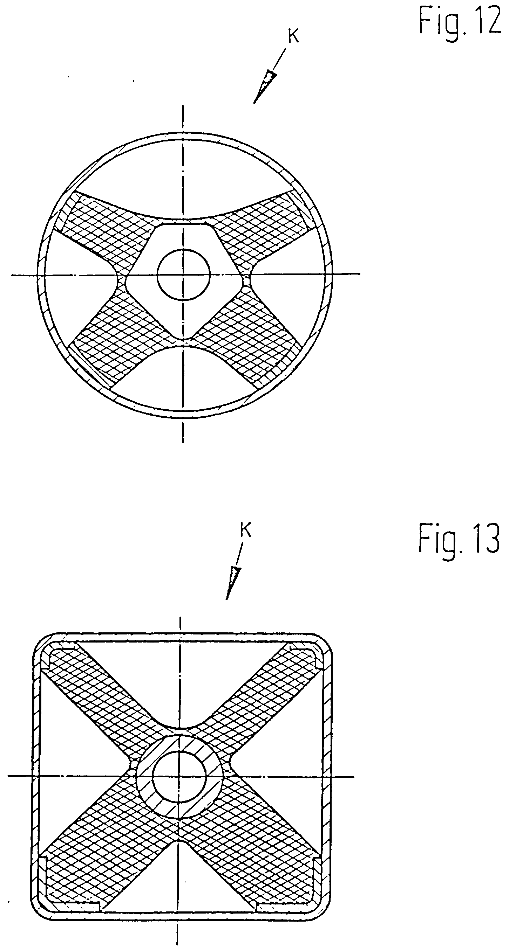

Die Figuren 8 und 13 zeigen verschiedene Ausführungen von betriebsbereiten, unter Last befindlichen Hülsengummifedern in quergeschnittener Darstellung. Die einander umschließenden Stützkörper werden bei den Ausführugen nach den Figuren 6 bis 9 durch Rohre gebildet und sind von rotationssymmetrischer Gestalt. Bei den Ausführungen nach den Figuren 10 und 11 ist jeweils nur einer der Stützkörper aus einem Rohr erzeugt, während der andere zumindest auf der an den Federkörper angrenzenden Seite eine nicht rotationssymmetrisch ausgebildete Oberfläche aufweist. Einer unerwünschten Relativverlagerung des unmittelbar angrenzenden Federkörpers aus Gummi in Umfangsrichtung wird hierdurch wirksam vorgebeugt.

Des weiteren ergibt sich aus der nicht parallel, gegenseitigen Zuordnung der einander gegenüberliegenden Oberflächen der Stützkörper die Möglichkeit, die Federraten der einzelnen Stege in gezielter Weise einzustellen. Darüber hinaus ergibt sich bei der Ausführung nach Figur 11 der Vorteil einer vereinfachten Festlegung der äußeren Stützkörper an dem angrenzenden Maschinenteil, beispielsweise der Karosserie eines Kraftfahrzeugs. In diesem Falle besteht der äußere Stützkörper aus einem Rechteckrohr, welches in vier Richtungen durch ebene Außenflächen begrenzt ist. Das Anschweißen oder Anschrauben der Hülsengummifeder an tragende Konstruktionen wird dadurch erleichtert. Zur Erreichung entsprechender Effekte kann es sich auch empfehlen, die Stützkörper zumindest auf einer der einander zugewandten Fläche reliefartig zu strukturieren, beispielsweise in Richtung der Achse der Hülsengummifeder. Es ergeben sich somit im Falle axial aufeinander folgende Bereiche unterschiedlichen Durchmessers.

Die bei den Ausführungen nach den Figuren 8 bis 15 zur Anwendung gelangenden Federkörper aus Gummi haben voneinander abweichende Profile. Die Dämpfungseinrichtung und die Art der Vorspannung werden in allen diesen Fällen nicht gezeigt. Bei der Ausführung nach Figur 8 sind die beiden einander umschließenden Stützkörper lediglich durch zwei unterschiedlicher Länge Stege verbunden, welche einen Winkel von 90° einschließen. In der Belastungsebene ist ein Anschlagpuffer 31 für die Begrenzung der maximalen Ausweichbewegung vorgesehen. Dieser ist dem Profil jedes der beiden Stege unter einem Winkel von etwa 135° zugeordnet.

Bei der Ausführung nach Figur 9 sind drei gleichmäßig auf dem Umfang verteilte Stege vorgesehen. Einer dieser Stege weist eine Mittelebene auf, die in der Belastungsebene angeordnet ist. Er ist von vermindertem Querschnitt.

Figur 10 zeigt eine Ausführung, bei der die einzelnen Stege wiederum gleichmäßig auf dem Umfang verteilt sind. Die unteren der beiden Stege haben jedoch in Umfangsrichtung eine größere Erstreckung als die oberen Stege. Hierdurch ergibt sich die erwünschte Relativverlagerung des inneren Stützkörpers während der erfindungsgemäß vorgesehenen Stauchung in senkrechter Richtung nach oben.

Ein ähnlicher Effekt ergibt sich während der erfindungsgemäß vorgesehenen Stauchung bei der Ausführung nach Figur 11. In diesem Falle sind fünf Stege auf dem Umfang der Hülsengummifeder verteilt, von denen der untere die größte Erstreckung in Umfangsrichtung aufweist, gefolgt von den beiden einander gegenüberliegenden Stegen, welche sich in horizontaler Richtung erstrecken und schließlich von den beiden nach oben weisenden Stegen, welche in Umfangsrichtung die geringste Umfangserstreckung aller Stege aufweisen. Die Ausführung gewährleistet eine besonders präzise Führung der beiden einander umschließenden Stützkörper quer zur hauptsächlichen Einleitungsrichtung der aufzunehmenden Kräfte. Des weiteren wirkt sich der oben beschriebene Aufbau in dieser Richtung positiv auf eine gewisse Flüssigkeitsdämpfung aus, welche dadurch zustande kommt, daß jeweils die flüssigkeitsgefüllten Kammern 22, 23 mit der flüssigkeitsgefüllten Kammer 21 durch eine dämpfend wirkende Verbindungsleitung verbunden sind. Auch die luftgefüllten Hohlräume 19 haben hierauf einen positiven Einfluß. Sie sind durch Drosselöffnungen 20 engen Querschnitts mit der Atmosphäre verbunden.

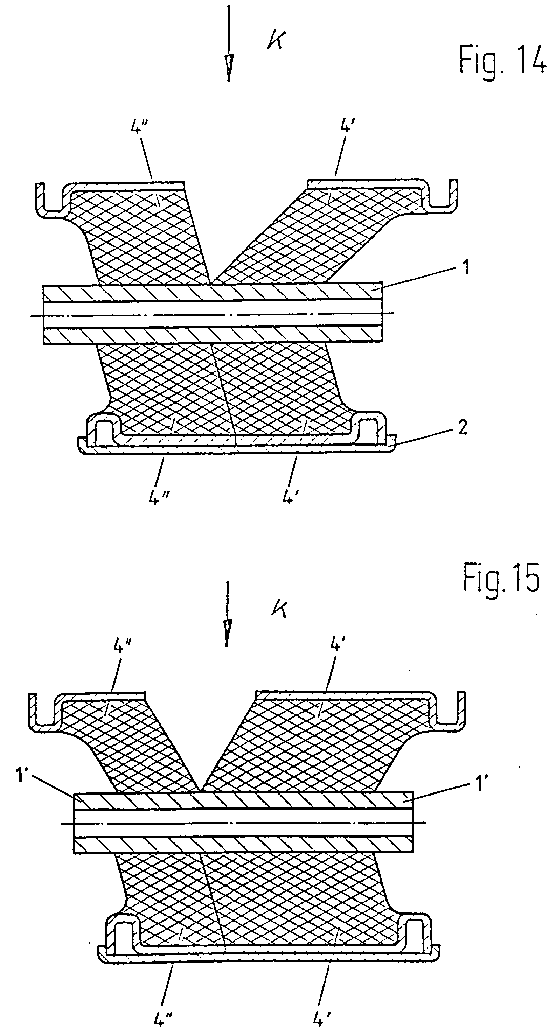

In den Figuren 14 und 15 werden zwei voneinander verschiedene Ausführungen von Federkörpern in längsgeschnittener Darstellung gezeigt, wobei die Zeichnungen jeweils so ausgeführt sind, daß im oberen Teil einer jeden Darstellung der Federkörper in ungestauchtem Zustand und im unteren Teil der Darstellung in gestauchtem Zustand gezeigt wird. Die Ausführungen können zur Anwendung gelangen mit irgendeiner oder einer der vorstehend beschriebenen Querschnittsformen.

Im Falle der Ausführung nach Figur 14 sind die Stege des Federkörpers 3 mittig geteilt, wobei die Teilung so erfolgt ist, daß der links gezeigte Teilsteg 4"vor seiner Stauchung der Achse dem inneren der Stützkörper 1 unter einem steileren Winkel zugeordnet ist als der im rechten Teil der Darstellung gezeigte Teilsteg 4'. Die durch die Stauchung verursachte Vorspannung in dem Federkörper 3 ist dadurch in axialer Richtung nicht ausgeglichen und so gestaltet, daß in den inneren Stützkörper 1 der betriebsbereiten Hülsengummifeder größere Kräfte eingeleitet werden können, die in einer Richtung nach rechts winksam sind als in umgekehrter Richtung. Eine solche Hülsengummifeder vermag dadurch dem angeschlossenen Maschinenelement nicht nur in radialer Richtung, sondern auch in axialer Richtung eine gute Führung und Relativbeweglichkeit zu verleihen.

Die Ausführung nach Figur 15 ist hinsichtlich ihres grundsätzlichen Aufbaus der vorstehend beschriebenen Ausführung nach Figur 14 ähnlich. In diesem Falle sind jedoch die Teilstege 4" und 4' unterschiedlich lang ausgebildet, wodurch die Tragfähigkeit der betriebsbereiten Hülsengummifeder in bezug auf Kräfte, die rechtsgerichtet in den inneren Stützkörper 1 eingeleitet werden, größer ist als im vorstehend beschriebenen Falle. Die radiale Vorspannung entspricht der vorstehend beschriebenen.

Eine solche Ausführung eignet sich ausgezeichnet für Anwendungsfälle, in denen eine besonders große, axial gerichtete, statische Vorlast mit einer großen, radial gerichteten Vorlast überlagert ist.

Ein solche Anwendungsfall ist beispielsweise im Bereich der Achsaufhängung eines Kraftfahrzeugs gegeben. Durch die in axialer Richtung geteilte Ausführung des inneren Stützkörpers und der damit verbundenen zwei Federkörper ergibt eine besonders einfache Herstellung. Dieser besteht aus zwei Teilstützkörpern 1', welche in die Trennebene der Teilstege 4', 4" flüssigkeitsdicht mittels einer Preßpassung verbunden sind.

## Patentansprüche

1. Überwiegend in einer Richtung belastbare Hülsengummifeder, umfassend zwei einander in achsparalleler Zuordnung umschließende Stützkörper (1, 2), die durch einen Federkörper aus Gummi aufeinander abgestützt sind, wobei der Federkörper an den inneren Stützkörper (1) anvulkanisiert ist, wobei der innere Stützkörper (1) entgegen der Belastungsrichtung verlagert angeordnet ist und wobei die Verlagerung so bemessen ist, daß sich nach dem Aufbringen der bestimmungsgemäß zu tragenden Last im schwingungsfreien Zustand die Arbeitsposition der beiden Stützkörper zueinander ergibt, wobei der Federkörper (3), in dem Bereich hinter einer sich quer zu der Belastungsrichtung durch die Mitte des inneren Stützkörpers (1) erstreckenden, gedachten ersten Ebene eine größere Tragfähigkeit in Belastungsrichtung aufweist als in dem Bereich davor und wobei die Zuordnung des inneren Stützkörpers im äußeren Stützkörper vor dem Aufbringen der zu tragenden Last durch eine elastische Zusammenpressung des Federkörpers zwischen den Stützkörpern bestimmt ist, dadurch gekennzeichnet, daß der Federkörper in Gestalt von Teilkörpern erzeugt ist, die einen radial nach außen zunehmenden, axialen Abstand voneinander haben und daß der Abstand durch eine gegeneinander gerichtete Verspannung der Teilkörper in der fertig montierten Hülsengummifeder im wesentlichen eliminiert ist, daß die Teilkörper eine voneinander abweichende Länge in axialer Richtung haben und daß das Profil des durch den Abstand gebildten Spaltes der Achse der Hülsengummifeder geneigt zugeordnet ist.

2. Hülsengummifeder nach Anspruch 1, dadurch gekennzeichnet, daß der Federkörper (3) auf der von dem inneren Stützkörper (1) abgewandten Seite in Flächen endet, die den inneren Stützkörper (1) in im wesentlichen übereinstimmenden Abständen umschließen.

3. Hülsengummideder nach Anspruch 1 bis 2, dadurch gekennzeichnet, daß der Federkörper (3) in radialer Richtung zusammengepreßt ist.

4. Hülsengummifeder nach Anspruch 1 bis 3 dadurch gekennzeichnet, daß der Federkörper (3) in axialer Richtung zusammengepreßt ist.

5. Hülsengummifeder nach Anspruch 1 bis 4, dadurch gekennzeichnet, daß der Federkörper (3) zumindest zwei in Umfangsrichtung beabstandete, in Gestalt der Teilkörper erzeugte Stege (4, 5,... n) aufweist.

6. Hülsengummifeder nach Anspruch 5, dadurch gekennzeichnet, daß die Stege (4, 5 ... n) eine voneinander abweichende Breite in Umfangsrichtung haben.

7. Hülsengummifeder nach Anspruch 5 bis 6, dadurch gekennzeichnet, daß die Stege (4, 5 ... n) eine voneinander abweichende Länge in Achsrichtung haben.

8. Hülsengummifeder nach Anspruch 5 bis 7, bei der vor- und hinter einer quer zur Belastungsrichtung durch die Mitte

**EP 0 503 687 B1**

des inneren Stützkörpers geführten, gedachten ersten Ebene Stege (4, 5 ... n) vorgesehen sind, die mit einer parallel zur Belastungsrichtung in der Mitte des inneren Stützkörpers errichteten, gedachten zweiten Ebene einen spitzen Winkel einschließen, dadurch gekennzeichnet, daß die vor der Ebene angeordneten Stege (4, 5, ... n) mit der zweiten Ebene einen größeren Winkel einschließen als die hinter der zweiten Ebene angeordneten Stege (4, 5 ... n).

**9.** Hülsengummifeder nach Anspruch 1 bis 8, dadurch gekennzeichnet, daß der Federkörper (3) auf der radial nach außen weisenden Seite mit Metallauflagen versehen ist.

**10.** Hülsengummifeder nach Anspruch 9, dadurch gekennzeichnet, daß die Metallauflagen aus Blech bestehen und daß die Bleche außenseitig der Form der Innenseite des äußeren Stützkörpers angepaßt sind.

**11.** Hülsengummifeder nach Anspruch 5 bis 10, dadurch gekennzeichnet, daß die Stege (4, 5 ... n) gemeinsam mit sie verbindenden, stirnseitigen Abschlußwänden (24), der Innen- und der Außenhülse (1, 2) wenigstens zum Teil flüssigkeitsgefüllte Kammern (8) begrenzen, die wenigstens teilweise durch Verbindungsöffnungen (12) verbunden sind.

**12.** Hülsengummifeder nach Anspruch 11, dadurch gekennzeichnet, daß die Stege (4, 5 ... n) im Bereich der stirnseitigen Abschlußwände (24) außenseitig an metallischen Stirnringen (15) festgelegt sind und daß die Stirnringe (15) von dem äußeren Stützkörper (2) auf der von den Stegen (4, 5 ... n) abgewandten Seite mit Vorsprüngen (16) umgriffen sind.

**13.** Hülsengummifeder nach Anspruch 11 und 12, dadurch gekennzeichnet, daß die Bleche (14) und wenigstens einer der Stirnringe (15) einteilig verbunden sind.

**14.** Hülsengummifeder nach Anspruch 12 bis 13, dadurch gekennzeichnet, daß die Stirnringe (15) gemeinsam mit dem äußeren Stützkörper (2) Ringkanäle begrenzen und daß die Ringkanäle einen Bestandteil der Verbindungsöffnungen (12) bilden.

**15.** Hülsengummifeder nach Anspruch 14, dadurch gekennzeichnet, daß durch die Verbindungsöffnungen (12) wenigstens zwei voneinander verschiedene Paare von Kammern flüssigkeitsleitend verbunden sind.

**16.** Hülsengummifeder nach Anspruch 1 bis 12, dadurch gekennzeichnet, daß der Federkörper im mittleren Bereich seiner axialen Länge herstellungsbedingt eine größere radiale Erstreckung hat als im Bereich der stirnseitigen Enden.

**Claims**

**1.** A rubber bushing which can be loaded mainly in one direction, comprising two support bodies (1, 2) which surround one another in an axially parallel arrangement and are supported on one another by a spring body made of rubber, the spring body being vulcanized onto the inner support body (1), the inner support body (1) being arranged offset counter to the loading direction, and the offset being dimensioned such that the working position of the two support bodies relative to one other is achieved in the non-vibrating state after imposition of the load to be borne in according with the intended use, the spring body (3) having a greater load-bearing capacity in the loading direction in the region behind an imaginary first plane extending transversely to the loading direction through the centre of the inner support body (1) than in the region in front of said plane, and the arrangement of the inner support body in the outer support body prior to imposition of the load to be borne being determined by elastic squeezing of the spring body between the support bodies, characterized in that the spring body is produced in the shape of partial bodies which have an axial spacing from one another which increases radially outwards, and in that the spacing is substantially eliminated by a tensioning of the partial bodies in opposition to one another in the completely assembled rubber bushing, in that the partial bodies have a length differing from one another in the axial direction, and in that the profile of the gap formed by the spacing is arranged inclined relative to the axis of the rubber bushing.

**2.** A rubber bushing according to claim 1, characterized in that the spring body (3) ends on the side facing away from the inner support body (1) in surfaces which surround the inner support body (1) with substantially consistent spacings.

**3.** A rubber bushing according to either of claims 1 and 2, characterized in that the spring body (3) is squeezed in the radial direction.

4. A rubber bushing according to any of claims 1 to 3, characterized in that the spring body (3) is squeezed in the axial direction.

5. A rubber bushing according to any of claims 1 to 4, characterized in that the spring body (3) has at least two webs (4, 5, ... n) which are spaced apart in the circumferential direction and are produced in the shape of the partial bodies.

6. A rubber bushing according to claim 5, characterized in that the webs (4, 5, ... n) have widths differing from one another in the circumferential direction.

7. A rubber bushing according to either of claims 5 and 6, characterized in that the webs (4, 5, ... n) have lengths differing from one another in the axial direction.

8. A rubber bushing according to any of claims 5 to 7, in which webs (4, 5, ... n) are provided in front of and behind an imaginary first plane which passes transversely to the loading direction through the centre of the inner support body, which webs enclose an acute angle with an imaginary second plane defined parallel to the loading direction in the centre of the inner support body, characterized in that the webs (4, 5, ... n) arranged in front of the plane enclose a larger angle with the second plane than the webs (4, 5, ... n) arranged behind the second plane.

9. A rubber bushing according to any of claims 1 to 8, characterized in that the spring body (3) is provided with metal rests on the side facing radially outwards.

10. A rubber bushing according to claim 9, characterized in that the metal rests consist of sheet metal, and in that the metal sheets are adapted on the outer side to the form of the inner side of the outer support body.

11. A rubber bushing according to any of claims 5 to 10, characterized in that the webs (4, 5, ... n), together with end-face terminating walls (24) connecting them, of the inner and outer sleeve (1, 2), bound chambers (8) which are at least partially liquid-filled and are at least partially connected by connecting openings (12).

12. A rubber bushing according to claim 11, characterized in that the webs (4, 5, ... n) are fixed on the outer side on metal end-face rings (15) in the region of the end-face terminating walls (24), and in that the outer support body (2) engages with projections (16) around the end-face rings (15) on the side facing away from the webs (4, 5, ... n).

13. A rubber bushing according to either of claims 11 and 12, characterized in that the metal sheets (14) and at least one of the end-face rings (15) are integrally connected.

14. A rubber bushing according to either of claims 12 and 13, characterized in that the end-face rings (15), together with the outer support body (2), bound annular channels, and in that the annular channels form a constituent part of the connecting openings (12).

15. A rubber bushing according to claim 14, characterized in that at least two pairs of chambers which are different from one another are connected in a liquid-conducting manner by the connecting openings (12).

16. A rubber bushing according to any of claims 1 to 12, characterized in that the spring body has, due to its production, a greater radial extent in the central region of its axial length than in the region of the end-face ends.

**Revendications**

1. Ressort du type à manchon en caoutchouc que l'on peut charger essentiellement dans un sens, comprenant deux corps-support (1, 2) s'enveloppant mutuellement dans une association parallèle à l'axe, qui s'appuient l'un sur l'autre par un corps élastique en caoutchouc, le corps élastique en caoutchouc étant vulcanisé au corps-support intérieur (1), le corps-support intérieur (1) étant disposé de manière décalée en sens inverse du sens de la charge et le décalage étant calculé de manière à obtenir, après l'application de la charge prescrite à porter, en état exempt de vibrations, la position de travail des deux corps-support l'un par rapport à l'autre, le corps élastique (3) présentant dans la partie située derrière un premier plan imaginaire passant perpendiculairement au sens de la charge par le centre du corps-support intérieur (1), une capacité portante dans le sens de la charge, qui est supérieure à celle dans la partie située devant, et l'affectation du corps-support intérieur dans le corps-support extérieur étant déterminée avant l'application de la charge à porter par une compression élastique du corps élastique placé entre les corps-support, caractérisé en ce que le corps élastique est conçu sous la forme de corps partiels qui sont séparés l'un de l'autre par une distance axiale augmentant radialement vers l'extérieur et en ce que la distance est essentiellement éliminée par une contrainte qu'exercent les corps partiels l'un contre l'autre dans le ressort à manchon en caoutchouc monté, en ce que les corps partiels ont une longueur différente dans le sens axial et en ce que le profil de la fente formée par la distance est incliné en direction de l'axe du ressort du type à manchon en caoutchouc.

2. Ressort du type à manchon en caoutchouc selon la revendication 1, caractérisé en ce que le corps élastique (3) débouche sur le côté opposé au corps-support intérieur (1) dans des surfaces qui enveloppent le corps-support intérieur (1) dans des intervalles essentiellement concordants.

3. Ressort du type à manchon en caoutchouc selon l'une quelconque des revendications 1 et 2, caractérisé en ce que le corps élastique (3) est comprimé dans le sens radial.

4. Ressort du type à manchon en caoutchouc selon l'une quelconque des revendications 1 à 3, caractérisé en ce que le corps élastique (3) est comprimé dans le sens axial.

5. Ressort du type à manchon en caoutchouc selon l'une quelconque des revendications 1 à 4, caractérisé en ce que le corps élastique (3) comporte au moins deux traverses (4, 5 ... n) distancées dans le sens circonférentiel, conçues sous la forme des corps partiels.

6. Ressort du type à manchon en caoutchouc selon la revendication 5, caractérisé en ce que les traverses (4, 5 ... n) ont une largeur différente l'une de l'autre dans le sens circonférentiel.

7. Ressort du type à manchon en caoutchouc selon l'une quelconque des revendications 5 et 6, caractérisé en ce que les traverses (4, 5 ... n) ont une longueur différente l'une de l'autre dans le sens axial.

8. Ressort du type à manchon en caoutchouc selon l'une quelconque des revendications 5 à 7, selon lequel sont prévues devant et derrière un premier plan imaginaire passant perpendiculairement au sens de la charge par le centre du corps-support intérieur, des traverses (4, 5 ... n) qui enferment avec un deuxième plan imaginaire formé parallélement au sens de la charge au centre du corps-support intérieur, un angle aigu, caractérisé en ce que les traverses (4, 5, ... n) disposées devant le plan enferment avec le deuxième plan un plus grand angle que les traverses (4, 5 ... n) disposées derrière le deuxième plan.

9. Ressort du type à manchon en caoutchouc selon l'une quelconque des revendications 1 à 8, caractérisé en ce que le corps élastique (3) est pourvu sur le côté dirigé radialement vers l'extérieur de couches métalliques.

10. Ressort du type à manchon en caoutchouc selon la revendication 9, caractérisé en ce que les couches métalliques sont en tôle et en ce que les faces externes des tôles sont adaptées à la forme de la face interne du corps-support extérieur.

11. Ressort du type à manchon en caoutchouc selon l'une quelconque des revendications 5 à 10, caractérisé en ce que les traverses (4, 5 ... n) du manchon intérieur et extérieur (1, 2) limitent ensemble avec des parois d'extrémité (24) en bout qui les relient, au moins partiellement des chambres (8) remplies de liquide, lesquelles communiquent au moins partiellement par des ouvertures de communication (12).

12. Ressort du type à manchon en caoutchouc selon la revendication 11, caractérisé en ce que les traverses (4, 5 ... n) sont fixées au niveau des parois d'extrémités (24) en bout sur la face externe de bagues frontales (15) métalliques et en ce que les bagues frontales (15) sont enveloppées par le corps-support extérieur (2), sur le côté opposé aux traverses (4, 5 ... n), avec des saillies (16).

13. Ressort du type à manchon en caoutchouc selon l'une quelconque des revendications 11 et 12, caractérisé en ce que les tôles (14) et au moins l'une des bagues frontales (15) sont reliées pour former un seul bloc.

14. Ressort du type à manchon en caoutchouc selon l'une quelconque des revendications 12 à 13, caractérisé en ce que les bagues frontales (15) limitent ensemble avec le corps-support extérieur (2) des canaux annulaires et en ce que les canaux annulaires forment une partie des ouvertures de communication (12).

15. Ressort du type à manchon en caoutchouc selon la revendication 14, caractérisé en ce qu'au moins deux paires de chambres différentes l'une de l'autre communiquent entre elles par les ouvertures de communication de manière à permettre le passage du liquide.

16. Ressort du type à manchon en caoutchouc selon l'une des revendications 1 à 12, caractérisé en ce que le corps élastique présente pour des raisons de fabrication dans la partie centrale de sa longueur axiale une extension radiale plus importante que dans la partie des extrémités en bout.

# Fig. 1

Schnitt A-A

Fig. 2

Fig. 3

Fig. 4

Fig. 5

Fig. 6

K

2

1

T4

T5

4

3

5

Fig. 7

T4

R1

T5

K1

W

Fig. 8

Fig. 9

Fig.10

K

Fig.11

K

21

19

18

20

23

22

Fig. 12

K

Fig. 13

K

Fig. 14

Fig. 15